# EUROPEAN PATENT APPLICATION

(11) **EP 2 930 000 A1**
(43) Date of publication of application: **14.10.2015**
(21) Application number: 13853728.7
(22) Date of filing: 11.11.2013
(51) Int. Cl.: B29C 33/02, B29C 35/02, B29D 30/06, B29L 30/00

(54) **TIRE VULCANIZATION BLADDER AND PNEUMATIC TIRE MANUFACTURING METHOD**

(30) Priority: 12.11.2012 JP 2012248643
(71) Applicant: The Yokohama Rubber Co., Ltd., Minato-ku Tokyo 105-8685 (JP)
(72) Inventor: SATOH, Hajime, Hiratsuka-shi Kanagawa 254-8601 (JP); YAMAMURA, Kenta, Hiratsuka-shi Kanagawa 254-8601 (JP)
(74) Representative: Dilg, Haeusler, Schindelmann Patentanwaltsgesellschaft mbH
(86) International application number: PCT/JP2013/080422
(87) International publication number: WO 2014/073678

(57) **Abstract**

To provide a tire vulcanization bladder and a pneumatic tire manufacturing method capable of applying the appropriate pressure in accordance with the inner surface shape of each part of the tire being manufactured. The thickness of a bladder main body portion (2) is set to a constant thickness, at least one of multiple circular ribs (4A), helical ribs (4B) in which multiple circumferential ribs are connected in a helix, multiple circular grooves (5A), and helical grooves (5B) in which multiple circumferential grooves are connected in a helix is formed on the inner surface of the bladder (1) at the portions corresponding to the tread portion (Z1), the shoulder portions (Z2), and the bead portions (Z4) of the tire, and when the bladder (1) is inserted into a green tire (G) that is set in the horizontal state within a mold (10) and expanded, the expansion state of the bladder (1) is regulated to press against the green tire (G) in accordance with the inner surface shape of the tread portion (Z1) the shoulder portions (Z2), and the bead portions (Z4).

## Description

### TECHNICAL FIELD

The present invention relates to a tire vulcanization bladder and a pneumatic tire manufacturing method, and more particularly relates to a tire vulcanization bladder and a pneumatic tire manufacturing method using the tire vulcanization bladder capable of applying the appropriate pressure to a green tire in accordance with the inner surface shape of each part of the tire being manufactured.

### BACKGROUND

When manufacturing pneumatic tires, a green tire is set in a mold, then a vulcanization bladder is expanded inside the green tire and vulcanization is carried out. The green tire is normally set within the mold in a horizontal state, and the vulcanization bladder is arranged with the cylinder axial direction in the vertical direction. The cylindrical vulcanization bladder normally has a constant thickness (circumferential stiffness is constant in the vertical direction), and top and bottom ends of the bladder are fixed with clamp members and inflated, so the center portion in the vertical direction expands most, and applies a stronger pressure than other parts.

Also, in recent years the trend towards low aspect ratio tires has progressed with higher performance tires, so the curvature of the inner surface in the tire cross-section varies greatly depending on the position. This curvature affects the pressure applied by the expanded vulcanization bladder to the green tire. The pressure applied by the vulcanization bladder to the portions corresponding to the locations on the inner surface of the cross-section of the tire being manufactured where the curvature is large tends to be smaller than the pressure at the portions corresponding to the locations where the curvature is small. As a result, when pressure is applied to the green tire by the vulcanization bladder, the unvulcanized rubber moves from the portions where the applied pressure is large towards the portions where it is small, which produces the problem that the rubber thickness of the manufactured tire is not same as the setting.

For example, it has been proposed that a bladder cap part be configured from a reinforcement reduction member formed from organic fibers or the like (see Patent Document 1). Also, it has been proposed that a reinforcing layer be disposed in a specific portion only of the inner surface of the vulcanization bladder, to increase stiffness of the portion where the reinforcing layer has been provided (see Patent Document 2). However, stiffness in the portions where the reinforcement reduction member or the reinforcing layer are provided is increased in all directions, not just circumferential stiffness, so it is difficult to apply the appropriate pressure in accordance with the inner surface shape of each location of the tire being manufactured.

### PRIOR ART DOCUMENT

### Patent Document

Patent Document 1: Japanese Unexamined Patent Application Publication No. 2006-103123A
Patent Document 2: Japanese Unexamined Patent Application Publication No. 2008-126495A

### SUMMARY OF THE INVENTION

### Problem to be Solved by the Invention

It is an object of the present invention to provide the tire vulcanization bladder and the pneumatic tire manufacturing method using the tire vulcanization bladder capable of applying the appropriate pressure in accordance with the inner surface shape of each part of the tire being manufactured.

### Means to Solve the Problem

A tire vulcanization bladder according to the present invention to achieve the above object is the tire vulcanization bladder used when vulcanizing a green tire set in a horizontal state within a mold, the bladder comprising a cylindrical bladder main body portion having a thickness thereof set to a constant thickness, at least one of rubber ribs and grooves extending in the circumferential direction formed on the inner surface of the bladder at the portions corresponding to the tread portion, the shoulder portions, and the bead portions of the tire; the ribs being multiple circular ribs or helical ribs in which multiple circumferential ribs are connected in a helix, and the grooves being multiple circular grooves or helical grooves in which multiple circumferential grooves are connected in a helix.

Also, the method of manufacturing a pneumatic tire according to the present invention includes vulcanizing a green tire using the tire vulcanization bladder as described above.

### EFFECT OF THE INVENTION

According to the present invention, the thickness of the cylindrical bladder main body portion is set to a constant thickness, and at least one of rubber ribs and grooves extending in the circumferential direction is formed on the inner surface of the bladder corresponding to the tread portion, the shoulder portions, and the bead portions of the tire, so circumferential stiffness of the portion where the ribs are formed is increased, and vertical stiffness (cylinder axial direction) of the portions where the grooves are formed is reduced. Also, with multiple circular ribs or helical ribs in which multiple circumferential ribs are connected in a helix, the change in vertical stiffness of the portions where the ribs are formed is comparatively small. On the other hand, with the multiple circular grooves or helical grooves in which multiple circumferential grooves are connected in a helix, the change in circumferential stiffness of the portions where the grooves are formed is comparatively small. Accordingly, by forming the ribs or grooves on the inner surface of the vulcanization bladder, stiffness in the desired direction of the vulcanization bladder can be freely changed. Therefore, it is possible to apply the appropriate pressure to the green tire by the vulcanization bladder in accordance with the inner surface shape of each of the parts of the tire being manufactured. Associated with this, it is possible to reduce movement of the unvulcanized rubber of the green tire in unwanted directions during vulcanization when the pressure is applied to the green tire by the vulcanization bladder, which has the advantage that the rubber thickness of the vulcanized tire is the same as the setting.

Here, for example, a specification in which the ribs are formed in the portion of the inner surface of the bladder corresponding to the tread portion of the tire, and the grooves are formed in the portions of the inner surface of the bladder corresponding to the shoulder portions and the bead portions of the tire can be adopted. With this specification, it is possible to prevent the portion of the vulcanization bladder corresponding to the tread portion from being excessively expanded and applying more than the necessary pressure to the green tire, while preventing the amount of expansion of the portion of the bladder corresponding to the shoulder portions and the bead portions from being too small and the pressure applied to the green tire from being weaker than necessary.

A specification can be adopted in which the ribs are not formed in the portions corresponding to main grooves of the tire of the portion of the inner surface of the bladder corresponding to the tread portion of the tire. At the portions corresponding to the main grooves, the green tire is pressed against main groove forming protrusions of the mold, so local expansion to the inner side can easily occur. Therefore, by not providing ribs on the inner surface of the vulcanization bladder corresponding to these portions, these portions of the vulcanization bladder can more easily expand outward, so it is possible to reduce the local expansion to the inner side of the green tire.

A specification can be adopted in which circumferential stiffness of the bladder in the center portion in the vertical direction of the bladder is set to be the maximum towards the center in the vertical direction by varying at least one of a cross-sectional area and a disposal spacing of the rib. If ribs are not formed on the portions of the inner surface of the bladder corresponding to the main grooves of the tire, a specification can be adopted in which circumferential stiffness of the bladder in the center portion in the vertical direction of the bladder excluding the portions of the inner surface of the bladder corresponding to the main grooves of the tire can be set to be the maximum towards the center in the vertical direction, by the same means. With this specification, when the vulcanization bladder is expanded, the center portion in the vertical direction of the bladder which expands most easily expands more easily in a flat manner. More preferably, a specification can be adopted in which circumferential stiffness of the bladder in the center portion in the vertical direction of the bladder is vertically symmetrical with respect to the center in the vertical direction of the bladder.

A specification can be adopted in which the cross-sectional shape of the ribs is an undercut shape in which the top portion is wider than the root portion. With this specification, it is possible to greatly increase circumferential stiffness, by reducing the increase in vertical stiffness of the bladder.

In order to apply the appropriate pressure in accordance with the inner surface shape of each part of the tire being manufactured, while minimizing the effect of the thermal conductance produced by providing the ribs and grooves on the inner surface of the bladder, for example, the height of the ribs may be not greater than the thickness of the bladder main body portion, and the disposal spacing of the ribs may be not less than 0.5 to not greater than 2.0 of the thickness of the bladder main body portion. Also, the depth of the grooves may be not less than 0.3 to not greater than 0.5 of the thickness of the bladder main body portion, and the disposal spacing of the grooves may be not less than 0.5 to not greater than 2.0 of the minimum thickness calculated by subtracting the depth of the groove from the thickness of the bladder main body portion.

### BRIEF DESCRIPTION OF THE DRAWINGS

- FIG. 1: is an explanatory view illustrating a vertical cross-section through an embodiment of a tire vulcanization bladder according to the present invention.
- FIG. 2: is an enlarged view around ribs of FIG. 1.
- FIG. 3: is an enlarged view around grooves of FIG. 1.
- FIG. 4: is an explanatory view illustrating a half vertical cross-section of the tire vulcanization bladder of FIG. 1 in an expanded state.
- FIG. 5: is an explanatory view illustrating a half vertical cross-section of the tire vulcanization bladder of FIG. 4 in a state where it is abutting the whole inner surface of a green tire.
- FIG. 6: is an enlarged view of a portion of FIG. 5.
- FIG. 7: is a cross-sectional view illustrating ribs arranged with a disposal spacing varied.
- FIG. 8: is a cross-sectional view illustrating a modified example of ribs.
- FIG. 9: is an explanatory view illustrating a vertical cross-section through another embodiment of the tire vulcanization bladder according to the present invention.

### BEST MODE FOR CARRYING OUT THE INVENTION

The following is a description of the tire vulcanization bladder and a pneumatic tire manufacturing method according to the present embodiment based on the embodiments illustrated on the drawings.

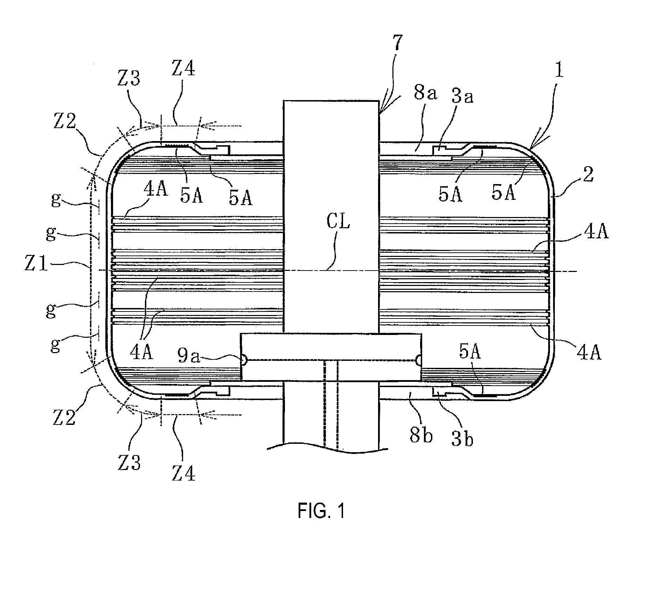

A tire vulcanization bladder 1 (hereafter referred to as bladder 1) as illustrated in FIGS. 1 to 3 is made from rubber such as butyl rubber, formed into a cylindrical shape. The thickness Gb of a bladder main body portion 2 is a predetermined constant thickness, and at the two end portions in the cylinder axial direction (opening end portions), a top side clamp portion 3a and a bottom side clamp portion 3b are provided that are formed thicker than the thickness Gb of the bladder main body portion 2. The thickness Gb varies depending on the size of the tire, but for example is about 4 mm to 20 mm. Note that the "constant" in the constant thickness of the thickness Gb includes for a certain percentage of variation that normally occurs in bladders.

The bladder 1 is installed in a central mechanism 7 of a vulcanization device with the cylinder axial direction in the vertical direction. Specifically, the top side clamp portion 3a and the bottom side clamp portion 3b of the bladder 1 are retained by a disc-shaped top side retaining portion 8a and a bottom side retaining portion 8b installed on the center post of the central mechanism 7. An injection nozzle 9a for injecting a heating medium H (and pressurizing medium), such as steam, inside the bladder 1 is provided on the center post of the central mechanism 7.

Rubber circular ribs 4A extending in the circumferential direction are formed in the portion of the inner surface of the bladder 1 corresponding to the tread portion Z1 of the tire being manufactured, and rubber circular grooves 5A extending in the circumferential direction are formed in the portions corresponding to the shoulder portions Z2 and the bead portions Z4 of the tire being manufactured. The circular ribs 4A are ribs that make a full circle in the circumferential direction on the inner surface of the bladder 1, and the multiple circular ribs 4A are formed at predetermined disposal spacing Pr. The circular grooves 5A are grooves that make a full circle in the circumferential direction on the inner surface of the bladder 1, and multiple circular grooves 5A are formed at predetermined disposal spacing Pg.

The cross-sectional shape of the circular ribs 4A in this embodiment has a peaked shape tapering towards the top portion 4a, but various types of shape can be adopted, and other aspects of the specification can be changed as appropriate. The circular grooves 5A with the same specification (same shape, groove depth D, and groove width Wg) are provided at a constant disposal spacing Pg, but the specification can be changed as appropriate.

In the present invention, at least one of rubber ribs and grooves extending in the circumferential direction are formed in the portions on the inner surface of the bladder 1 corresponding to the tread portion Z1, the shoulder portions Z2, and the bead portions Z4 of the tire. The portion on the inner surface of the bladder 1 corresponding to the side portion Z3 of the tire has a flat shape where neither ribs nor grooves are formed. Ribs are formed integrally with the bladder main body portion 2 with the rubber from which the bladder main body portion 2 is configured, and grooves are formed integrally with the bladder main body portion 2 by recessing the rubber configuring the bladder main body portion 2. In this embodiment, ribs are not formed in at least the portion on the inner surface of the bladder 1 corresponding to the main grooves g of the tire, from among the portion corresponding to the tread portion Z1 of the tire.

As described later, helical ribs 4B in which multiple circumferential ribs are connected in a helix can be adopted as the ribs. Also, helical grooves 5B in which multiple circumferential grooves are connected in a helix can be adopted as the grooves.

The shoulder portions Z2 of the tire being manufactured is the location with the greatest curvature (small radius of curvature) of all the locations. The bead portion Z4 is a location with the opposite curvature direction to the other locations.

In the present invention, a cross-sectional area and the disposal spacing Pr of the circular ribs 4A can also be set constant, but by varying at least one of the cross-sectional area and the disposal spacing Pr of the circular ribs 4A, it is possible to set circumferential stiffness of the bladder 1 in the center portion in the vertical direction of the bladder to be the maximum towards the center CL in the vertical direction of the bladder 1. However, if the circular ribs 4A are not formed on the portion of the inner surface of the bladder 1 corresponding to the main grooves g of the tire, then by varying at least one of the cross-sectional area and the spacing in the vertical direction of the circular ribs 4A excluding the portion on the inner surface of the bladder 1 corresponding to the main grooves g of the tire, circumferential stiffness of the bladder 1 in the center portion in the vertical direction of the bladder is set to be the maximum towards the center in the vertical direction. In this embodiment, the disposal spacing Pr of the circular ribs 4A is constant and the cross-sectional area is varied.

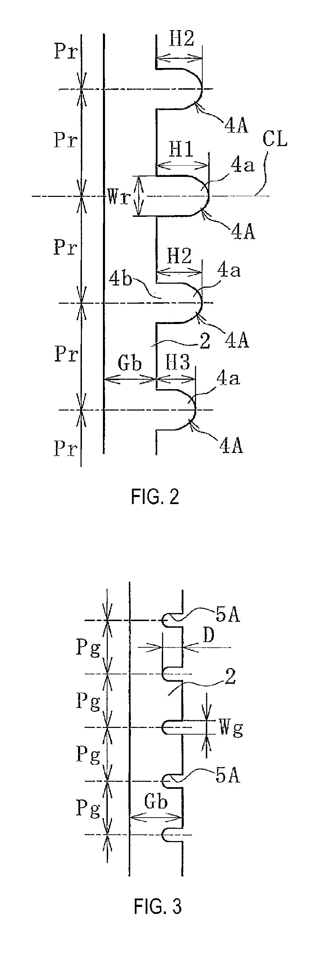

In other words, in the circular ribs 4A of FIG. 2, the rib heights become larger in the order H3, H2, and H1 towards the center CL in the vertical direction. Because the width Wr of the root portion 4b of each of the circular ribs 4A is the same, the cross-sectional area of the circular ribs 4A is set to be the maximum towards the center CL in the vertical direction of the bladder 1. In the range that the circular ribs 4A is formed, circumferential stiffness of the bladder 1 increases gradually by a maximum of about 40% to 60% towards the center CL in the vertical direction.

The center portion in the vertical direction of the bladder is the range of about 5% to 20% of the length in the vertical direction of the bladder 1 (the length from the top side clamp portion 3a to the bottom side clamp portion 3b) on either side in the vertical direction from the center CL in the vertical direction of the bladder 1.

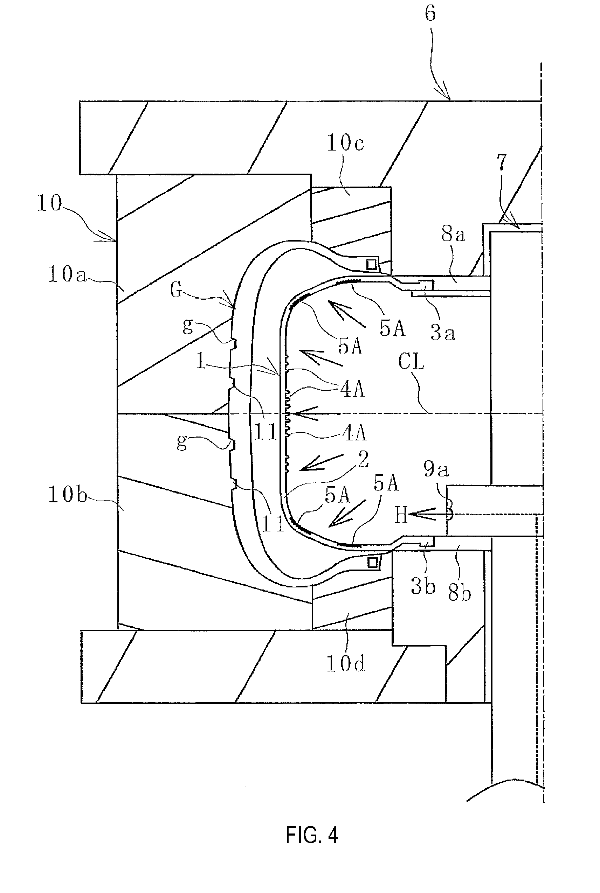

In the manufacturing method of the pneumatic tire according to the present invention, a green tire G that is set in the horizontal state within a mold 10 installed in a vulcanization device 6 is vulcanized using the bladder 1, as illustrated in FIG. 4. In this embodiment, the mold 10 is configured from a top side mold 10a, a bottom side mold 10b, a circular upper portion plate 10c, and a circular lower portion plate 10d. The green tire G is arranged within the opened mold 10, and the bladder 1 is inserted into the green tire G.

Next, the mold 10 is closed, and the heating medium H (and pressurizing medium) is injected into the bladder 1 from the injection nozzle 9a, thereby filling the mold 10. Specifically the inner surface of the green tire G is heated while applying pressure by expanding the bladder 1 using a gas such as steam, air, nitrogen, or the like.

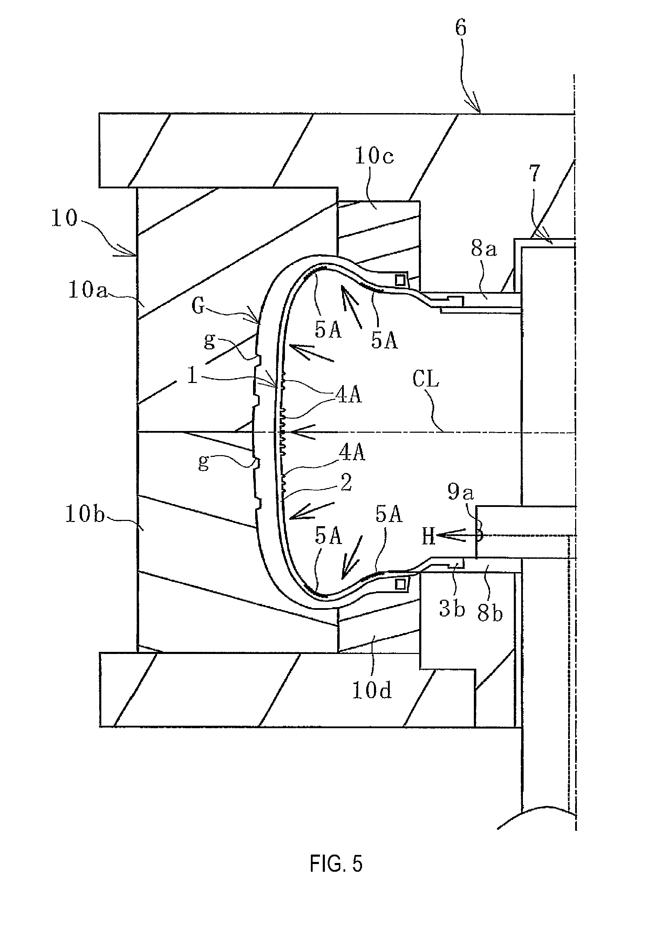

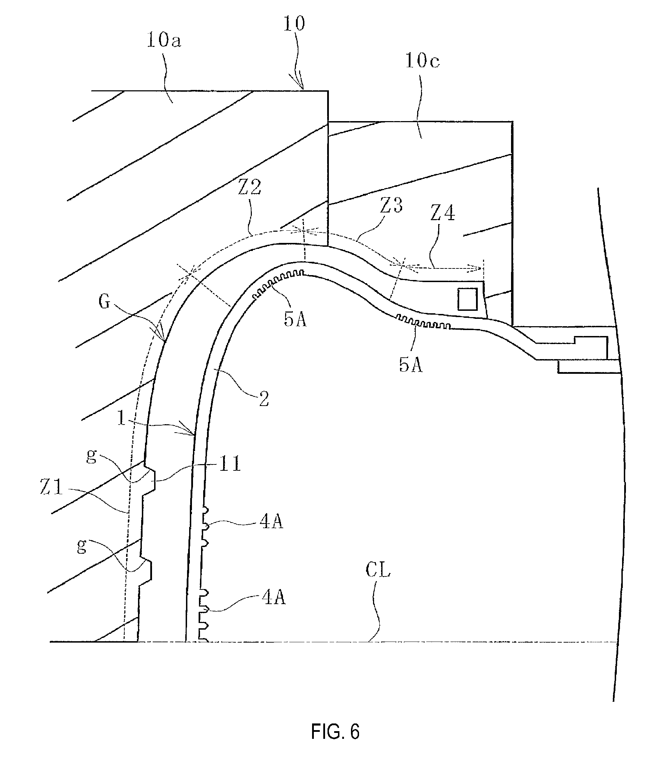

After the bladder 1 is expanded as illustrated in FIG. 4, the bladder 1 is further expanded to apply pressure to the whole inner surface of the green tire G to vulcanize the green tire G, as illustrated in FIGS. 5 and 6. As a result of forming the multiple circular ribs 4A on the inner surface of the bladder 1, circumferential stiffness of the portion corresponding to the tread portion Z1 is greater than that of other portions. Therefore, when the bladder 1 is expanded, it is possible to prevent the portion corresponding to the tread portion Z1 from expanding excessively and strongly applying pressure more than necessary to the green tire G.

On the other hand, as a result of the multiple circular grooves 5A formed on the inner surface of the bladder 1, vertical stiffness of the portions corresponding to the shoulder portions Z2 and the bead portions Z4 is smaller than that of the other portions. In this way, at the portions corresponding to the shoulder portions Z2 and the bead portions Z4, the bladder 1 deforms easily to follow the inner surface shape of the cross-section of the tire to be manufactured, even without applying high inner pressure. Therefore, when the bladder 1 is expanded, it is possible to prevent the problem that the amount of expansion at the portions corresponding to the shoulder portions Z2 and the bead portions Z4 is small and the pressure applied to the green tire G is weaker than necessary. In other words, it is possible to apply more pressure than conventionally to the portions corresponding to the shoulder portions Z2 and the bead portions Z4 of the green tire G, which were difficult to strongly apply pressure to with the bladder 1.

Also, with the multiple circular ribs 4A (the helical ribs 4B in which multiple circumferential ribs are connected in a helix), the variation in vertical stiffness of the portions where the ribs are formed is comparatively small. On the other hand, with the multiple circular grooves 5A (the helical grooves 5B in which multiple circumferential grooves are connected in a helix), the change in circumferential stiffness of the portions where the grooves are formed is comparatively small. Accordingly, by forming the ribs or grooves on the inner surface of the bladder 1 in this way, stiffness in the desired direction of the bladder 1 can be freely changed. In other words, the degree of freedom of design of the bladder 1 is increased significantly. In this way, it is possible to apply the appropriate pressure to the green tire G by the bladder 1 in accordance with the inner surface shape of each of the parts of the tire being manufactured.

Associated with this, it is possible to reduce movement of the unvulcanized rubber of the green tire G in unwanted directions during vulcanization, which has the advantage that the rubber thickness of the vulcanized tire is the same as the setting. Also, the thickness Gb of the bladder main body portion 2 is a constant thickness, so it is possible to minimize changes in the thermal conductance. Therefore, it is possible to manufacture a high quality pneumatic tire.

At the portions corresponding to the main grooves g of the tire, the green tire G is pressed against main groove forming protrusions 11 of the mold 10, so local expansion to the inner side can easily occur. Therefore, ribs may be not provided on the inner surface of the bladder 1 at the portions corresponding to the main grooves g, as in this embodiment, so that a flat shape is obtained. In this way, these portions of the bladder 1 can more easily expand outward, so the local expansion to the inner side of the green tire G can be reduced.

Also, when the bladder 1 is expanded, the amount of expansion is the greatest near the center CL in the vertical direction, so a specification may be adopted in which circumferential stiffness of the bladder 1 is set to be the maximum towards the center CL in the vertical direction, as in this embodiment. With this specification, the center portion in the vertical direction of the bladder can more easily expand in a flat manner, and it is possible to make the pressure applied by the expanded bladder 1 to the inner surface of the green tire G at the center portion in the vertical direction of the bladder generally constant. More preferable is a specification in which circumferential stiffness of the bladder 1 is symmetrical in the vertical direction with respect to the center CL in the vertical direction.

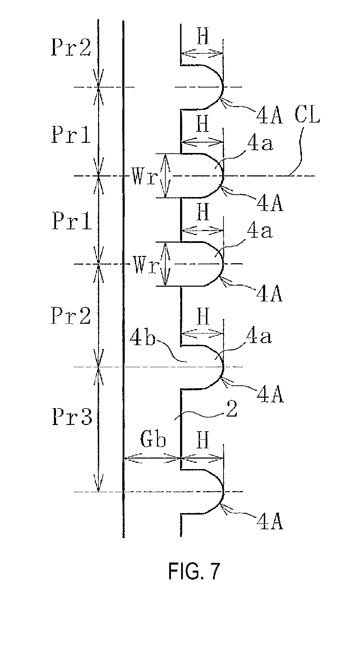

For example, as illustrated in FIG. 7, by keeping the cross-sectional area of each of the circular ribs 4A constant and varying the disposal spacing Pr of the circular ribs 4A, it is possible to set circumferential stiffness of the bladder 1 in the center portion in the vertical direction of the bladder to be the maximum towards the center CL in the vertical direction. The circular ribs 4A in FIG. 7 are all the same (the same shape with the same rib height H and width Wr at the root portion 4b), and the disposal spacings Pr of adjacent circular ribs 4A becomes smaller in the order Pr3, Pr2, Pr1 towards the center CL in the vertical direction.

Alternatively, by varying both the cross-sectional area of the circular ribs 4A and the disposal spacing Pr of the circular ribs 4A, it is possible to set circumferential stiffness of the bladder 1 to be the maximum towards the center CL in the vertical direction.

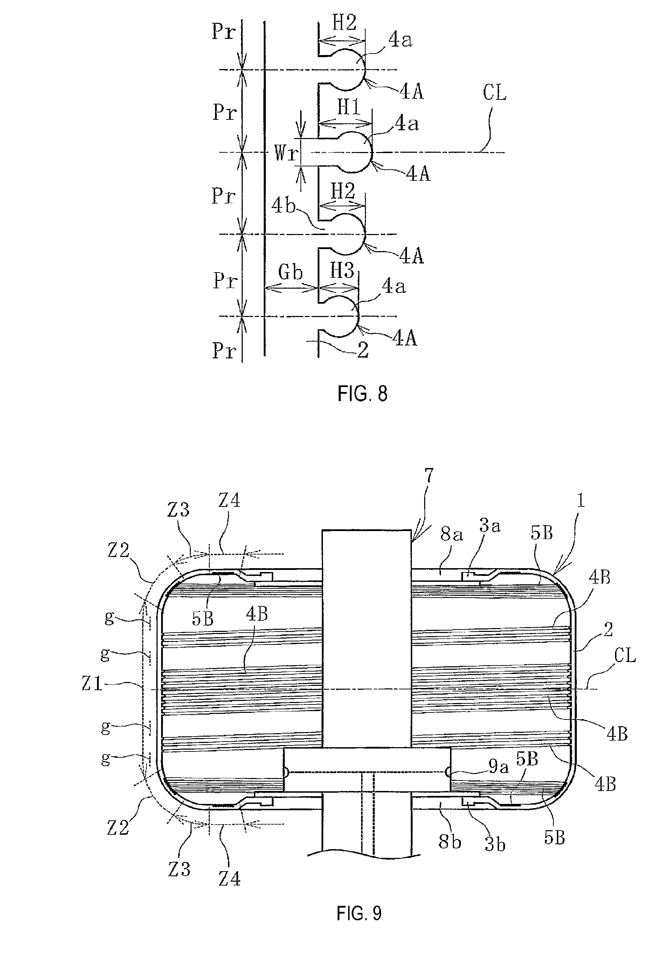

As illustrated in FIG. 8, the cross-sectional shape of the circular ribs 4A can also be an undercut shape in which the top portion 4a is wider than the root portion 4b. In this embodiment, the top portion 4a has a circular shape. By providing the undercut shape in this manner, the increase in vertical stiffness is easily reduced while increasing circumferential stiffness of the bladder 1.

In FIG. 8, the disposal spacing Pr of the circular ribs 4A is constant, the widths Wr of the root portions 4b are the same, and the rib height H of the circular ribs 4A increases in the order H3, H2, H1 towards the center CL in the vertical direction. In other words, by making the disposal spacing Pr of the circular ribs 4A constant and varying the cross-sectional area of the circular ribs 4A, circumferential stiffness of the bladder 1 in the center portion in the vertical direction of the bladder is set to be the maximum towards the center CL in the vertical direction.

Preferably the height H of the circular ribs 4A is not greater than the thickness Gb of the bladder main body portion 2, for example from 50% to 100% of the thickness Gb. Also, preferably the disposal spacing Pr of the circular ribs 4A is not less than 0.5 and not greater than 2.0 (from 50% to 200%) of the thickness Gb of the bladder main body portion 2. In addition, the cross-sectional area of the bladder 1 over the range that the circular ribs 4A are provided should be about from 130% to 160% of the cross-sectional area in the case where the circular ribs 4A are not provided (in other words, where the thickness Gb is constant).

If the height H of the circular ribs 4A is less than 50% of the thickness Gb or if the disposal spacing Pr exceeds 2.0 of the thickness Gb, the increase in circumferential stiffness of the bladder 1 could be too small. If the height H of the circular ribs 4A exceeds 100% of the thickness Gb or if the disposal spacing Pr is less than 0.5 of the thickness Gb, the increase in circumferential stiffness of the bladder 1 could be too great, which creates difficulties in terms of manufacture (including increasing cost), and the difference in thermal conductance with other portions could be too great.

Preferably the depth D of the circular grooves 5A is, for example, not less than 0.3 and not greater than 0.5 (from 30% to 50%) of the thickness Gb of the bladder main body portion 2. Preferably the disposal spacing Pg of the circular grooves 5A is not less than 0.5 and not greater than 2.0 (from 50% to 200%) of the minimum thickness calculated by subtracting the depth D of the circular grooves 5A from the thickness Gb of the bladder main body portion 2. In addition, the cross-sectional area of the bladder 1 over the range where the circular grooves 5A are provided should be not less than 70% of the cross-sectional area in the case that the circular grooves 5A are not provided (in other words, when the thickness Gb is constant).

If the depth D of the circular grooves 5A is less than 0.3 of the thickness Gb or if the disposal spacing Pg is greater than 2.0 of the minimum thickness calculated by subtracting the depth D of the circular grooves 5A from the thickness Gb of the bladder main body portion 2, the reduction in vertical stiffness of the bladder 1 could be too small. If the depth D of the circular grooves 5A exceeds 0.5 of the thickness Gb of the bladder main body portion 2 or if the disposal spacing Pg is less than 0.5 of the minimum thickness calculated by subtracting the depth D of the circular grooves 5A from the thickness Gb of the bladder main body portion 2, the reduction in vertical stiffness of the bladder 1 could be too great, which would produce difficulties in terms of manufacture (including increased cost), and the difference of thermal conductance from the other portions could be too large. Various shapes can be adopted for the cross-sectional shape of the circular grooves 5A, but preferably the bottom surface has a circular arc shaped as in the embodiments described above, from the point of view of durability and the like.

Instead of the circular ribs 4A as described above, the helical ribs 4B in which multiple circumferential ribs are connected in a helix at the predetermined disposal spacing Pr can be used, as in the embodiment illustrated in FIG. 9. Also, instead of the circular grooves 5A as described above, the helical ribs 4B in which multiple circumferential ribs are connected in a helix at the predetermined disposal spacing Pg can be used. In the case of a helical shape, the disposal spacings Pr and Pg are the spacing between adjacent portions with one revolution. Virtually the same effect as the previous embodiment can be obtained with this embodiment.

In addition, if the helical ribs 4B and the helical grooves 5B are provided in this way, when the heating medium H (and pressurizing medium) is injected and filled into the bladder 1 from the injection nozzle 9a in the vulcanization process, the heating medium H flows along the helical ribs 4B and the helical grooves 5B, and this is expected to have the merit that the heating medium H can be easily agitated within the bladder 1.

In this embodiment, the inclination directions of the helical ribs 4B and the helical grooves 5B are different, with the helical ribs 4B having a positive slope and the helical grooves 5B having a negative slope, but the helical ribs 4B and the helical grooves 5B can have the same inclination direction. Also, the same specification and the same arrangement can be applied to the helical ribs 4B and the helical grooves 5B as the circular ribs 4A and the circular grooves 5A as described in the previous embodiment.

With the spread of low aspect tires, the present invention is more effective when applied to the manufacture of tires with a low aspect ratio in which there are large differences in curvature of the inner surface of the tire cross-section with location. For example, it is ideal for the manufacture of tires with an aspect ratio of 60% or less.

### REFERENCE NUMBER

1 Bladder
2 Bladder main body portion
3a Top side clamp portion
3b Bottom side clamp portion
4A Circular rib
4B Helical rib
4a Top portion
4b Root portion
5A Circular groove
5B Helical groove
6 Vulcanization device
7 Central mechanism
8a Top side retaining portion
8b Bottom side retaining portion
9a Injection nozzle
10, 10a, 10b, 10c, 10d Mold
11 Main groove forming protrusion
G Green tire
g Main groove
Z1 Tread portion
Z2 Shoulder portion
Z3 Side portion
Z4 Bead portion
H Heating medium

## Claims

1. A tire vulcanization bladder used upon vulcanizing a green tire set in a horizontal state within a mold, the bladder comprising:
a cylindrical bladder main body portion having a thickness thereof set to a constant thickness; and
at least one of rubber ribs and grooves extending in a circumferential direction formed on an inner surface of the bladder at portions corresponding to a tread portion, shoulder portions, and bead portions of the tire;
the ribs being multiple circular ribs or helical ribs in which multiple circumferential ribs are connected in a helix; and
the grooves being multiple circular grooves or helical grooves in which multiple circumferential grooves are connected in a helix.

2. The tire vulcanization bladder according to claim 1, wherein
the ribs are formed in the portion of the inner surface of the bladder corresponding to the tread portion of the tire, and the grooves are formed in the portions of the inner surface of the bladder corresponding to the shoulder portions and the bead portions of the tire.

3. The tire vulcanization bladder according to claim 2, wherein
the ribs are not formed in portions corresponding to main grooves of the tire of the portion of the inner surface of the bladder corresponding to the tread portion of the tire.

4. The tire vulcanization bladder according to claim 2, wherein
circumferential stiffness of the bladder in a center portion in a vertical direction of the bladder is set to be the maximum towards a center in a vertical direction by varying at least one of a cross-sectional area and a disposal spacing of the rib.

5. The tire vulcanization bladder according to claim 3, wherein
circumferential stiffness of the bladder in the center portion in the vertical direction of the bladder excluding the portions corresponding to the main grooves of the tire on the inner surface of the bladder is set to be the maximum towards the center in the vertical direction, by varying at least one of the cross-sectional area and the disposal spacing of the rib.

6. The tire vulcanization bladder according to claim 4 or 5, wherein
circumferential stiffness of the bladder in the center portion in the vertical direction of the bladder is vertically symmetrical with respect to the center in the vertical direction of the bladder.

7. The tire vulcanization bladder according to any one of claims 1 to 6, wherein
a cross-sectional shape of the rib is an undercut shape with a top portion wider than a root portion.

8. The tire vulcanization bladder according to any one of claims 1 to 7, wherein
a height of the ribs is not greater than a thickness of the bladder main body portion, and the disposal spacing of the ribs is not less than 0.5 and not greater than 2.0 of the thickness of the bladder main body portion.

9. The tire vulcanization bladder according to any one of claims 1 to 8, wherein
a depth of the grooves is not less than 0.3 and not greater than 0.5 of the thickness of the bladder main body portion, and a disposal spacing of the grooves is not less than 0.5 and not greater than 2.0 of the minimum thickness calculated by subtracting the depth of the groove from the thickness of the bladder main body portion.

10. A method of manufacturing a pneumatic tire, the method comprising the step of: vulcanizing a green tire using the tire vulcanization bladder described in any one of claims 1 to 9.
